# EUROPÄISCHE PATENTSCHRIFT

(11) **EP 1 005 676 B1**
(45) Veröffentlichungstag und Bekanntmachung des Hinweises auf die Patenterteilung: **16.04.2003**
(21) Anmeldenummer: 98948748.3
(22) Anmeldetag: 07.08.1998
(51) Int. Cl.: G06F 12/14

(54) **VERFAHREN ZUR VERBESSERUNG DER STEUERUNGSMÖGLICHKEIT IN DATENVERARBEITUNGSANLAGEN MIT ADRESSÜBERSETZUNG**
PROCESS FOR IMPROVING THE CONTROLLABILITY OF DATA PROCESSING EQUIPMENT WITH ADDRESS TRANSLATION
PROCEDE POUR AMELIORER LA COMMANDABILITE DE SYSTEMES DE TRAITEMENT DE DONNEES AVEC TRADUCTION D'ADRESSES

(30) Priorität: 19.08.1997 DE 19735948
(43) Veröffentlichungstag der Anmeldung: 07.06.2000
(73) Patentinhaber: Fujitsu Siemens Computers GmbH, 81739 München (DE)
(72) Erfinder: BAUSCH, Jean, D-81737 München (DE)
(74) Vertreter: Epping, Wilhelm, Dipl.-Ing.
(86) Internationale Anmeldenummer: DE9802276
(87) Internationale Veröffentlichungsnummer: WO99009482

(56) Entgegenhaltungen:
- EP-A- 0 600 112
- EP-A- 0 701 211
- US-A- 5 075 842
- Joseph Heinrich:, MIPS R4000 User's Manual, Prentice Hall, 1993

## Beschreibung

Die Erfindung betrifft ein Verfahren gemäß dem Oberbegriff des Patentanspruches 1.

Datenverarbeitungsanlagen mit Adreßübersetzung weisen vielfach einen sogenannten "Translation-Lookaside-Buffer" (TLB) als Übersetzungsspeicher auf, in dem bei einer Übersetzung ermittelte Paare von virtueller und realer Adresse zusammen mit Steuerinformationen vorübergehend gespeichert werden, so daß zur Ermittlung der realen Adressen zu einer virtuellen Adresse nicht immer die volle Übersetzungsroutine zu durchlaufen ist.

Zu den Steuerinformationen gehört neben einer Kennzeichnung der Gültigkeit durch ein Steuerbit V vielfach auch ein sogenanntes "Dirty Bit" D, das den einzigen Schreibschutzmechanismus bildet. Im gesetzten Zustand des Bits ist ein Beschreiben der zugehörigen Benutzerseite erlaubt. Erfolgt dagegen ein Schreibzugriff bei nicht gesetztem Zustand, dann wird eine sogenannte "TLB Modified Exception" ausgelöst. Im Rahmen der dadurch eingeleiteten Routine wird dann an Hand von weiteren Steuerdaten im zugehörigen Seitentafeleintrag geprüft, ob es sich um eine echte Schreibschutzverletzung aus Sicht des Betriebssystems handelt oder nicht. Man siehe zum Beispiel Joseph Heinrich: "MIPS RM4000 User's Manual, Prentice Hall, 1993, Seiten 62ff. Hardwaretechnisch ist die Möglichkeit offenbart, den Prozessor Schreibvorgänge auch in schreibgeschützte Seiten ausführen zu lassen. Das Patent EP 0 701 211 A2, Hitachi Ltd, beschreibt die Verwendung einer derartigen Seitentafel für Speicherschutz zwecke.

Hiervon ausgehend ist es Aufgabe der Erfindung, die Möglichkeiten der internen Steuerung des Systems bei vorliegendem Schreibschutz so zu definieren, dass bei geringem Steueraufwand die Vorteile einer solchen Schreibmöglichkeit in an sich geschützte Seiten genutzt werden können.

Dies wird durch die kennzeichnenden Merkmale des Patentanspruches 1 erreicht, indem der internen Steuerung zusätzlich erlaubt wird, auch auf schreibgeschützte Benutzerseiten zu schreiben. Auf diese Weise können vom System aus z.B. Speicherdaten korrigiert oder neuer, von mehreren Tasks gemeinsam genutzter Programmcode eingeschrieben werden. Dazu wird der Schreibschutz vorübergehend aufgehoben. Damit nach Ausführung der Schreibzugriffe mit Systemberechtigung der Schreibschutz für die betroffenen Seiten wieder hergestellt werden kann, erfolgt eine Markierung durch gesonderte Indikatoren.

Zweckmäßig wird entsprechend Patentanspruch 2 die Prüfung auf Vorliegen von Schreibzugriffen mit Systemberechtigung in den bisherigen Ablauf für die Behandlung der Unterbrechungsanferderung bei schreibgeschützten Seiten miteinbezogen, wobei ein Setzen des Steuerbits für die vorübergehende Schreibberechtigung durch die interne Steuerung des Systems ein Wiederholen des Schreibzugriffes und auch weitere Schreibzugriffe ermöglicht, ohne daß dabei eine erneute Unterbrechungsanforderung ausgelöst wird.

Die Aufhebung der Schreibberechtigung für das System erfolgt dann jeweils beim Wechsel des Betriebsmodus vom System auf den Benutzer, indem zunächst geprüft wird, ob eines der die Indikatoren bildenden Steuerbits gesetzt ist. Bei gesetztem Steuerbit für eine global genutzte Seite sind dann alle Adresseneinträge im Übersetzungsspeicher für ungültig zu erklären, die global benutzte Seiten betreffen und deren Steuerbit für die Schreibberechtigung gesetzt ist. Bei gesetztem Steuerbit für eine tasklokal genutzte Seite sind dagegen alle Einträge für die betroffene Task für ungültig zu erklären. Dies kann in einfacher Weise durch Änderung der zugehörigen Adreßraumkennung ASID erfolgen.

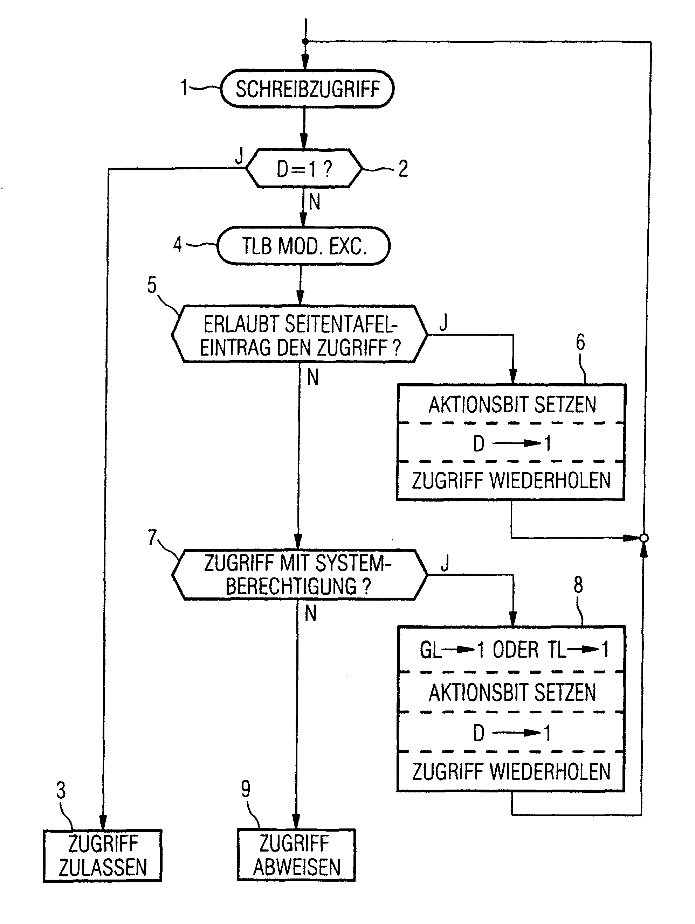

Einzelheiten der Erfindung seien nachfolgend an Hand eines Ausführungsbeispieles erläutert. In der Zeichnung ist dazu ein Ablaufdiagramm dargestellt.

Liegt gemäß Schritt 1 ein Schreibzugriff vor, dann wird gemäß Schritt 2 zunächst geprüft, ob das die Schreibberechtigung kennzeichnende Steuerbit D gesetzt ist. Ist dieses der Fall, dann kann gemäß Schritt 3 der Zugriff zugelassen werden. Im anderen Falle wird gemäß Schritt 4 eine Unterbrechungsanforderung TLB MOD.EXC. ausgelöst. Die Behandlung dieser Unterbrechungsanforderung führt in bekannter Weise zur Überprüfung des zugehörigen Seitentafeleintrages gemäß Schritt 5. Handelt es sich dabei nicht um eine echte Schreibschutzverletzung, dann kann der Zugriff erlaubt werden. Gemäß Schritt 6 werden daher in bekannter Weise die entsprechenden Aktionsbits, z.B. ein Änderungsbit, und das Steuerbit D gesetzt, so daß der Zugriff ohne Auslösung einer Unterbrechungsanforderung wiederholt werden kann.

Führt die Überprüfung gemäß Schritt 5 zum Ergebnis, daß der Seitentafeleintrag den gewünschten Schreibzugriff nicht erlaubt, dann wird in Auswirkung der Erfindung der Zugriff nicht sofort abgewiesen, sondern es wird zusätzlich überprüft, ob es sich um einen Schreibzugriff mit Systemberechtigung durch die interne Steuerung handelt. Erst wenn auch diese Prüfung negativ ausfällt, wird dann gemäß Schritt 9 der Zugriff endgültig abgewiesen. Im anderen Falle wird gemäß Schritt 8 wie bei Schritt 6 reagiert, mit dem Unterschied, daß zusätzlich noch eines der die beiden Indikatoren bildenden Steuerbits GL bzw. TL gesetzt wird. Handelt es sich bei der betroffenen Seite um eine global genutzte Seite, dann wird das Steuerbit GL setzt und im Falle einer tasklokal genutzten Seite das Steuerbit TL.

Bei der Ausführung der Schritte 6 und 8 wird das Steuerbit D nur im Eintrag des Übersetzungsspeichers TLB geändert. Der zugehörige Seitentafeleintrag bleibt davon unberührt, so daß dort der Schreibschutz weiterhin vermerkt bleibt. Andererseits ermöglicht das gesetzte Steuerbit D die Ausführung von Schreibzugriffen ohne Auslösung von Unterbrechungsanforderungen, bis der Eintrag verdrängt oder ungültig wird.

Nach dem Wechsel des Betriebsmodus, d.h. vor dem ersten von einem Benutzer ausgelösten Schreibzugriff, dürfen Schreibzugriffe auf von vorangehenden Systemzugriffen betroffene schreibgeschützte Seiten nicht mehr erlaubt werden. Um daher den Schreibschutz für die betroffenen Seiten wiederherstellen zu können, müßte eine Liste über die betroffenen Seiten geführt werden. Das erfordert aber einen verhältnismäßig großen Steuerungsaufwand.

Die Erfindung nutzt hierzu die beiden Steuerbits GL und TL, die nach dem Wechsel des Betriebsmodus überprüft werden.
- Ist das Steuerbit GL gesetzt, müssen alle Einträge im Übersetzungsspeicher TLB für ungültig erklärt werden, deren Steuerbit D gesetzt ist und die globale Benutzerseiten betreffen.
- Ist das Steuerbit TL gesetzt, dann brauchen lediglich die Einträge der zugehörigen Task für ungültig erklärt zu werden. Dies erfolgt in einfacher Weise durch Änderung der der Task zugeteilten Adreßraumkennung ASID. Da das Steuerbit TL in einem tasklokalen Speicherbereich, dem sogenannten Task Control Block,abgespeichert wird, erfolgt die Überprüfung im Gegensatz zu der für das Steuerbit GL jeweils nur beim Aktivieren der betroffenen Task.

In beiden Fällen wird also nicht im einzelnen geprüft, welche der Benutzerseiten von einem Schreibzugriff mit Systemberechtigung betroffen waren.

Anschließend wird das jeweils gesetzte Steuerbit GL bzw. TL wieder zurückgesetzt.

## Patentansprüche

1. Verfahren für Datenverarbeitungsanlagen mit Adreßumsetzung und Verwendung eines Übersetzungsspeichers (TLB) für übersetzte Adressenpaare aus virtueller und realer Adresse fur Speicherseiten in Verbindung mit Steuerbits (V,D) zur Kennzeichnung der Gültigkeit und der Schreibberechtigung (D) als Einträge, wobei bei nicht zugelassenem Schreibzugriff das Steuerbit (D) nicht gesetzt ist und infolge dessen eine Unterbrechungsanforderung ausgelöst wird, die eine Überprüfung der Schreibberechtigung an Hand der im zugehörigen Seitentafeleintrag vorliegenden Steuerdaten auslöst, wobei
- bei erlaubtem Zugriff das Steuerbit (D) für die Schreibberechtigung gesetzt und der Schreibzugriff wiederholt wird, während bei nicht erlaubtem Zugriff der Schreibzugriff abgewiesen wird,
- jeweils vor endgültiger Abweisung eines jeden Schreibzugriffs weiterhin geprüft wird, ob ein Zugriff mit Systemberechtigung vorliegt und daher erlaubt werden soll,
- in diesem Falle das Steuerbit (D) für die Schreibberechtigung ebenfalls gesetzt wird, ohne den zugehörigen Seitentafeleintrag zu ändern, sowie als Steuerbit (GL zw. TL) gesonderte Indikatoren, die nach Beendigung der Systemzugriffe dafür genutzt werden, abhängig von der Art des Indikators Einträge im Übersetzungsspeicher (TLB, ungültig werden zu lassen, gesetzt werden, von denen ein globales Steuerbit (GL) gesetzt wird, wenn die aktuelle Seite global genutzt wird oder ein tasklokales Steuerbit (TL) gesetzt wird, wenn die aktuelle Seite tasklokal genutzt wird, bevor der Schreibzugriff wiederholt wird, ohne dabei eine erneute Unterbrechungsanforderung auszulösen, und
- die Steuerbits (GL, TL) für die Nutzungsart der Seiten beim Wechsel des Betriebsmodus vom System auf den Benutzer überprüft werden, indem
- bei gesetztem Steuerbit (GL) für eine global genutzte Seite alle Adresseneinträge im Übersetzungsspeicher (TLB) für ungültig erklärt werden, deren Steuerbit (D) für die Schreibberechtigung gesetzt ist und die zugleich global genutzte Seiten betreffen,
- bei gesetztem Steuerbit (TL) für eine tasklokal genutzte Seite alle Einträge der betroffenen Task für ungültig erklärt werden und
- danach das jeweils gesetzte Steuerbit (GL bzw. TL) wieder zurückgesetzt wird.
**dadurch gekennzeichnet,**
**daß** Einträge einer aktuellen Task durch Änderung der zugeteilten Adreßraumkennung (ASID) für ungültig erklärt werden.

2. Verfahren nach Anspruch 1,
**dadurch gekennzeichnet,**
**daß** weitere Schreibzugriffe mit Systemberechtigung auf dieselbe Seite chne Auslösung einer Unterbrechungsanforderung ausführbar sind, bis der Eintrag im Übersetzungsspeicher (TLB) verdrängt oder ungültig wird.

## Claims

1. Method for data processing installations using address conversion and use of a translation memory (TLB) for translated address pairs comprising a virtual address and a real address for memory pages in connection with control bits (V, D) for identifying the validity and the write authorization (D) as entries, where, if write access is not permitted, the control bit (D) is not set and as a result an interruption request is triggered which initiates a check on the write authorization using the control data available in the associated page table entry, where
- if access is permitted, the control bit (D) for write authorization is set and write access is repeated, whereas write access is rejected if access is not permitted,
- before each write access operation is finally rejected, checking is respectively continued to determine whether access with system authorization is involved and therefore needs to be permitted,
- in this case the control bit (D) for write authorization is likewise set without changing the associated page table entry, and, as the control bit (GL zw. [sic] TL), separate indicators which are used after the system access operations have ended in order to invalidate entries in the translation memory (TLB) on the basis of the type of indicator are set, among which a global control bit (GL) is set if the current page is used globally, or a control bit (TL) local to a task is set if the current page is used locally to a task before write access is repeated, without triggering a fresh interruption request in the process, and
- the control bits (GL, TL) for the type of use of the pages are checked when the operating mode is changed from the system to the user by virtue of
- a set control bit (GL) for a globally used page involving all those address entries in the translation memory (TLB) whose control bit (D) is set for write authorization and which relate to globally used pages at the same time being declared invalid,
- a set control bit (TL) for a page used locally for a task involving all the entries of the task in question being declared invalid, and
- the respective control bit (GL or TL) which is set then being reset again,
**characterized**
**in that** entries for a current task are declared invalid by changing the allocated address space identifier (ASID).

2. Method according to Claim 1,
**characterized**
**in that** further write access operations with system authorization to the same page can be performed without triggering an interruption request until the entry in the translation memory (TLB) is displaced or becomes invalid.

## Revendications

1. Procédé pour des installations informatiques avec conversion d'adresse et utilisation d'une mémoire (TLB) de compilation pour des paires d'adresses compilées, constituées d'adresses réelles et virtuelles pour des pages de mémoire en liaison avec des bits (V, D) de commande pour la caractérisation de la validité et l'habilitation (D) en écriture en tant qu'entrées, dans lequel, lorsqu'un accès en écriture n'est pas autorisé, le bit (D) de commande n'est pas activé et en raison de cela il est déclenché une demande d'interruption qui déclenche un contrôle de l'habilitation en écriture au moyen des données de commande présentes dans l'entrée associée de tableau de pages, dans lequel
- lorsque l'accès est permis, le bit (D) de commande est activé pour l'habilitation en écriture et l'accès en écriture est répété, tandis que, lorsque l'accès n'est pas permis, l'accès en écriture est rejeté,
- respectivement avant le rejet définitif de chaque accès en écriture, il est en outre contrôlé s'il y a un accès avec habilitation du système et s'il doit donc être permis,
- dans ce cas, le bit (D) de commande est activé également pour l'habilitation en écriture, sans modifier l'entrée de tableau de pages associé, et il est activé comme bit (GL ou TL) de commande des indicateurs particuliers qui, après que les accès au système sont achevés, sont utilisés pour faire que, en fonction du type de l'indicateur, les entrées dans la mémoire (TLB) de compilation deviennent non valables, indicateurs parmi lesquels un bit (GL) global de commande est activé lorsque la page actuelle est utilisée globalement ou un bit (TL) de commande à tâche localisée est activé lorsque la page actuelle est utilisée en tâche locale avant que l'accès en écriture soit répété sans déclencher pour autant une demande renouvelée d'interruption, et
- les bits (GL, TL) de commande pour le type d'utilisation des pages sont contrôlés, lors du passage du mode de fonctionnement du système à l'utilisateur, par le fait que
- lorsque le bit (GL) de commande est activé pour une page utilisée globalement, toutes les entrées d'adresses dans la mémoire (TLB) de compilation sont déclarées comme n'étant pas valables, entrée dont le bit (D) de commande est activé pour l'habilitation en écriture et qui concerne en même temps des pages utilisées globalement,
- lorsque le bit (TL) de commande est activé pour une page utilisée à une tâche locale, toutes les entrées de la tâche concernée sont déclarées comme n'étant pas valables et
- ensuite le bit (GL ou TL) de commande respectivement activé est remis à l'état initial,
**caractérisé en ce que** des entrées d'une tâche actuelle sont déclarées comme n'étant pas valables par modification de la caractéristique spatiale d'adresse (ASID) qui leur est assignée.

2. Procédé suivant la revendication 1, **caractérisé en ce que** d'autres accès en écriture à habilitation du système peuvent être réalisés sur la même page sans déclenchement d'une demande d'interruption jusqu'à ce que l'entrée dans la mémoire de compilation (TLB) soit restreinte ou devienne non valable.
